# FASCICULE DE BREVET EUROPEEN

(11) **EP 3 157 877 B1**
(45) Date de publication et mention de la délivrance du brevet: **15.01.2020**
(21) Numéro de dépôt: 15725637.1
(22) Date de dépôt: 01.06.2015
(51) Int. Cl.: C03B 5/193

(54) **PROCÉDÉ D'INJECTION DE FLUIDE GAZEUX**
EINSPRITZVERFAHREN FÜR EINEN GASFÖRMIGEN FLUID
METHOD FOR INJECTING GASEOUS FLUID

(30) Priorité: 17.06.2014 EP 14172726
(43) Date de publication de la demande: 26.04.2017
(73) Titulaire: AGC Glass Europe, 1348 Louvain-La-Neuve (BE)
(72) Inventeur: CHERDON, Benoit, B-6144 Roux (BE); FONTAINE DE GHELIN, Olivier, B-1460 Ittre (BE); DELMOTTE, Laurent, B-4260 Ciplet (BE)
(74) Mandataire: Le Vaguerèse, Sylvain Jacques
(86) Numéro de dépôt international: PCT/EP2015/062159
(87) Numéro de publication internationale: WO 2015/193097

(56) Documents cités:
- WO-A1-2014/085361
- CN-U- 203 256 111
- JP-A- H0 280 327
- US-A- 2 937 864
- US-A- 3 960 532
- US-A- 4 600 425

## Description

La présente invention concerne un procédé d'injection de fluides gazeux au sein de matières vitreuses en fusion dans les fours de verrerie et en particulier destiné à l'injection de fluide gazeux présentant des risques de condensation au sein du dispositif d'injection.

En effet, dans le processus de fabrication des matières vitreuses (verre flotté, verre de bouteillerie, fibre de verre, laine de verre, etc...) l'injection d'un fluide gazeux est très souvent utilisée pour notamment assurer un brassage suffisant de la matière en fusion (verre en fusion ou verre fondu) au sein du four (US3397973, US3853524, EP2228348 par exemple), injecter des matières sous forme gazeuse au sein du verre fondu, contrôler certaines réactions ou équilibres chimiques par l'adjonction de certains fluides gazeux au sein du verre fondu. Par exemple US3960532 propose d'injecter de la vapeur d'eau sèche dans un bain de verre fondu.

Lorsque le fluide gazeux pénètre dans le verre en fusion, plusieurs phénomènes peuvent se produire. Le plus certain est la formation de bulles au sein du verre en fusion, la taille des bulles pouvant varier et évoluer au cours de leur parcours au sein du verre en fusion. Par exemple, une partie de ces bulles peut s'échapper du verre en fusion en atteignant la surface, une autre partie peut se dissoudre complètement dans le verre en fusion ou subsister partiellement voire encore totalement. Des gaz dissous dans le verre en fusion peuvent aussi interagir avec les bulles initialement formées et modifier ainsi leurs volumes et compositions chimiques initiales.

L'importance de ces différents phénomènes dépend de nombreux paramètres, notamment les caractéristiques de la structure du dispositif, les paramètres d'injection du fluide gazeux (débit constant ou pulsé, des débits de plusieurs Nm³/h ne sont pas rares, pression d'injection, température d'injection), la température du verre en fusion et ses caractéristiques de viscosité, densité, composition chimique etc...

La structure la plus souvent rencontrée du dispositif est souvent sous la forme d'un assemblage tubulaire par lequel on injecte le fluide gazeux au sein du verre en fusion. Cet assemblage tubulaire traverse une des parois du four pour rentrer en contact avec le verre en fusion. Une disposition très souvent rencontrée est une position verticale dans le fond du four (dit la sole du four). Dans ce cas, une des extrémités du dispositif est sous la sole du four et l'autre, dite la tête, débouche dans le verre en fusion. Cette tête est soit au ras de la sole ou engagée plus profondément dans la masse de verre en fusion. Des enfoncements de plusieurs dizaines de centimètres du dispositif dans le verre en fusion sont courants. Des dispositions non verticales sont aussi possibles, par exemple inclinées voire même horizontales. L'alimentation en fluide gazeux se fait depuis l'extrémité située en dehors du four et l'injection du gaz dans le verre en fusion se réalise par la tête.

La partie du dispositif comprise entre la tête et la paroi du four est en contact avec du verre en fusion. Cette partie est donc exposée à des températures élevées, entre 1000 et 1500°C, et à un milieu agressif et corrosif qu'est le verre en fusion. Dans un tel environnement, pour résister mécaniquement, thermiquement et éviter une corrosion et érosion du dispositif, il faut prévoir une réalisation technique adaptée. Cela passe par un choix de matériau adéquat et dans la quasi-totalité des cas par un système de refroidissement. Les matériaux communément utilisés sont de l'acier mécanique (ST 37 par exemple), des nuances d'acier (aciers réfractaires), des matériaux céramiques réfractaires, des métaux nobles tel que le platine ou ses alliages.

En fonction du choix du matériau, il convient de maintenir le dispositif dans une plage de température adéquate au sein du verre fondu.. Cela se réalise communément par le contrôle de sa température via un refroidissement du dispositif. Plus la partie qui est en contact avec le verre en fusion est importante, plus ce refroidissement doit être efficace. Pour les réalisations tubulaires en acier assez fréquentes, on tache de rester en dessous des 500°C environ et de préférence aux alentours de 450°C, en particulier dans les zones de soudure.

Un système de refroidissement très commun, est réalisé par la circulation forcée d'un fluide de refroidissement au sein du dispositif. Les fluides de refroidissement les plus couramment utilisés sont l'eau, l'huile, un mélange d'huile, de l'huile de silicone, un mélange d'huile de silicone. Pour chaque type de circulation et fluide de refroidissement envisagés, des contraintes de fonctionnement apparaissent, en particulier la température maximum que le fluide de refroidissement peut atteindre sans préjudice de sa qualité et état, pression maximum supporté par le circuit, débit à fournir, etc... Pour l'eau par exemple, on tache en général de ne pas dépasser environ 50°C et de rester préférentiellement aux alentours des 40°C au sein du dispositif afin de se prémunir des phénomènes de précipitation, dépôt et encrassement au sein du circuit de refroidissement. Ces précipités, dépôts et encrassements peuvent générer des points chauds au sein du circuit de refroidissement qui peuvent conduire à une vaporisation locale de l'eau. Cela a pour conséquence d'accentuer à cet endroit la vitesse de précipitation et l'encrassement et en final la quantité de dépôt et la dureté de celui-ci. Ce phénomène s'auto entretient et s'accélère de lui-même. Il conduit à terme à un échauffement local tel que le dispositif peut être fortement endommagé voire même détruit. Les débits d'eau utilisés vont dépendre de la géométrie du dispositif et de la surface en contact avec le verre en fusion, du type de circuit de refroidissement, etc... Des débits d'eau de l'ordre de plusieurs milliers de litres par heure et par dispositif sont assez fréquents.

Le refroidissement du dispositif a pour conséquence une baisse de la température du fluide gazeux que l'on désire injecter dans le verre en fusion. Si cette chute de température est trop importante, des phénomènes de condensation du fluide gazeux injecté peuvent se produire au sein du dispositif d'injection et aboutir à une injection partielle voire complète du fluide sous forme liquide et non gazeuse au sein du verre fondu.

Cette injection sous forme liquide est en général à éviter car elle conduit à une remise très rapide en phase gazeuse du fluide injecté lorsqu'il rentre en contact avec du verre fondu. Cela se traduit par la création d'un grand nombre de bulles de tailles non contrôlées qui très souvent sont source de défauts dans le produit fini, en particulier dans la fabrication de verre plat (flotté). De plus cela conduit aussi à une instabilité du processus d'injection se traduisant par des variations de pression et de débit avec de potentiel coup de bélier au sein de l'installation.

Il convient donc d'éviter ces phénomènes de condensation du fluide gazeux injecté au sein du dispositif d'injection. Pour résoudre ce problème, il convient de s'assurer que la température du fluide gazeux injecté ne descendra pas en dessous de sa température de condensation fixée par les conditions opératoires d'injection (pression, caractéristiques du fluide qui peut être un gaz pur ou un mélange de différents gaz). Par exemple, si le fluide gazeux injecté est de la vapeur d'eau, un mélange gazeux contenant au moins 50 % de vapeur d'eau, on ne descendra pas en dessous d'une centaine de degré.

Vu la nécessité du contrôle de la température du dispositif au sein du verre fondu, il y a donc un compromis à trouver entre le refroidissement adéquat du dispositif afin de préserver sa tenue mécanique, sa résistance à la corrosion et érosion et le maintien de la température du fluide injecté au-dessus de sa température de condensation.

La présente invention telle que définie dans les revendications concerne un procédé avantageux permettant l'injection d'un fluide gazeux au sein de matières vitreuses en fusion dans les fours de verrerie en s'assurant que le fluide injecté reste en phase gazeuse dans le dispositif et ce malgré la présence d'une circulation de fluide de refroidissement, assurant la tenue mécanique et la résistance à la corrosion et érosion du dispositif au sein de la matière vitreuse en fusion.

Le dispositif utilisé dans le procédé selon l'invention se distingue de l'art antérieur en ce qu'il comporte un système d'isolation thermique du conduit amenant le fluide gazeux injecté par rapport au système de refroidissement utilisé dans ce genre de dispositif. Ce système d'isolation est composé d'une chambre qui sépare le conduit d'injection du fluide gazeux du circuit de refroidissement. Cette chambre creuse est remplie d'un gaz qui peut circuler ou non, par exemple de l'air. La géométrie de cette chambre et son étendue dépend du niveau d'isolation recherchée et de la structure générale du dispositif.

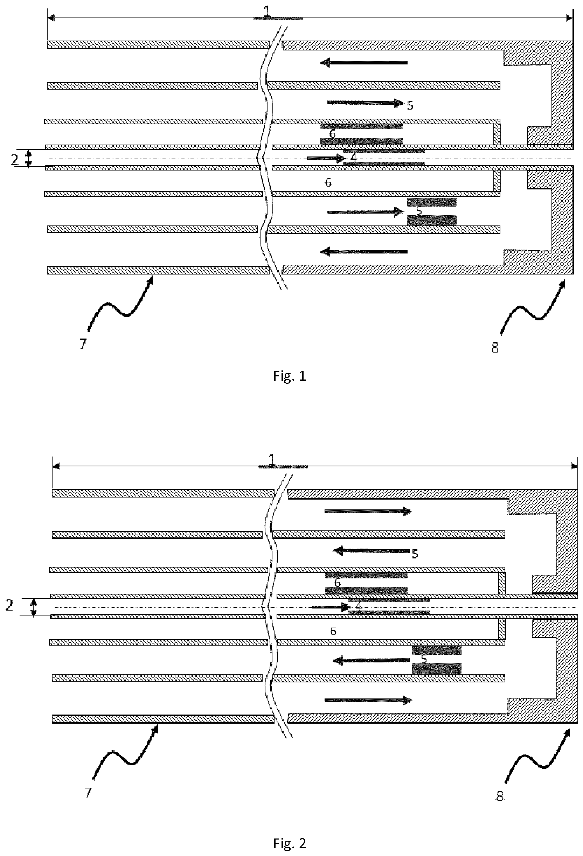

Des exemples de réalisation et du fonctionnement du dispositif sont illustrés dans la suite. Aux figures 1 et 2, un premier exemple de réalisation est donné. Le dispositif est en général placé verticalement et traverse de part en part le fond du four. Le matériau pour le réaliser est communément de l'acier mécanique (ST27 par exemple) mais peut être aussi d'autres nuances d'acier et ou de métaux nobles tels que le platine et ses alliages. La partie 7, est située en dehors du verre fondu, sous la sole du four. La partie 8, appelée la tête du dispositif, est la partie du dispositif la plus proche de la surface du bain de verre fondu. Par la partie centrale 4, on injecte un fluide gazeux dans le verre en fusion. Entre la tête du dispositif 8 et la sole du four, le dispositif est en contact avec le verre en fusion.

Du à ce contact entre le verre en fusion très chaud (entre 1000 et 1500°C) et le matériau, il est nécessaire de refroidir le dispositif. Une méthode très souvent utilisée consiste à faire circuler un fluide de refroidissement 5 au sein du dispositif. Ce fluide est par exemple de l'eau. Deux circulations sont possibles. Soit comme à la figure 1, le liquide de refroidissement rentre par le centre et ressort en longeant la paroi extérieure, soit comme à la figure 2, le liquide de refroidissement rentre en longeant la paroi extérieure et ressort du dispositif par le centre. Afin d'isoler thermiquement le conduit d'injection du fluide gazeux du circuit de refroidissement, une zone d'isolation est placée entre le circuit de refroidissement et le circuit d'injection. Cette zone prend la forme d'une chambre d'isolation 6 remplie d'un gaz, par exemple de l'air. Cette chambre est présente sur quasiment toute la longueur 1 du dispositif. Dans cette première version, cette chambre d'isolation 6 s'arrête avant la tête du dispositif 8. Les deux configurations de circulation du fluide de refroidissement ne sont pas égales d'un point de vue de l'isolation thermique du tube d'injection central. La configuration de la figure 2 donne de meilleurs résultats d'isolation thermique du tube central.

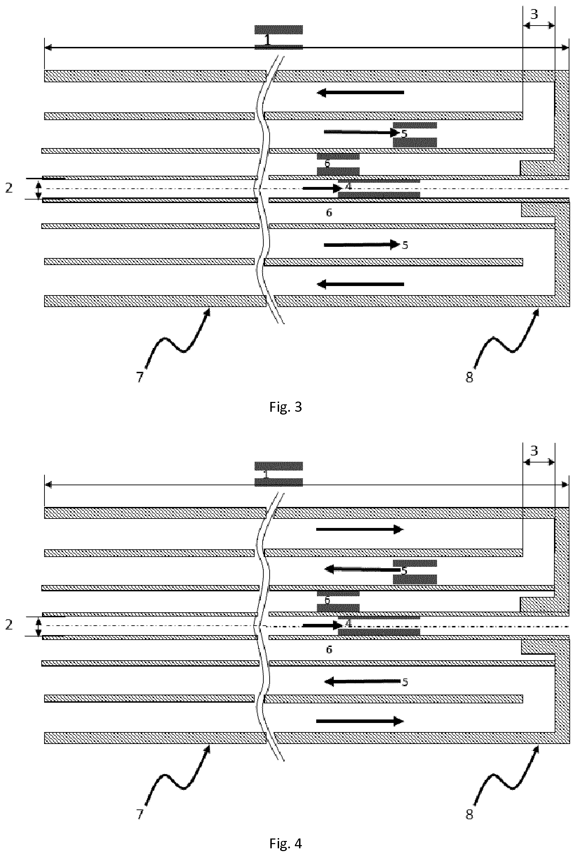

Aux figures 3 et 4, une deuxième version du dispositif est présentée. Le mode de fonctionnement et les caractéristiques générales sont semblables à la première version. La différence se porte sur la forme de la tête du dispositif 8 et de la chambre d'isolation 6. En effet dans ce cas, la chambre d'isolation 6 se poursuit jusqu'à la tête du dispositif 8, ce qui n'est pas le cas dans la version précédente. Ici aussi le circuit de refroidissement 5 peut être réalisé dans deux sens différents. Soit du centre vers l'extérieur comme à la figure 3 ou de l'extérieur vers le centre comme à la figure 4. Comme dans la version précédente, ces deux manières de procéder ne sont pas équivalentes d'un point de l'isolation thermique de la partie centrale d'injection du fluide gazeux 4. La version de la figure 4 est la plus efficace. La dimension 3, soit la distance de passage du canal de liquide de refroidissement au niveau de la tête du dispositif 8 est pour cette version de l'ordre de 10 mm.

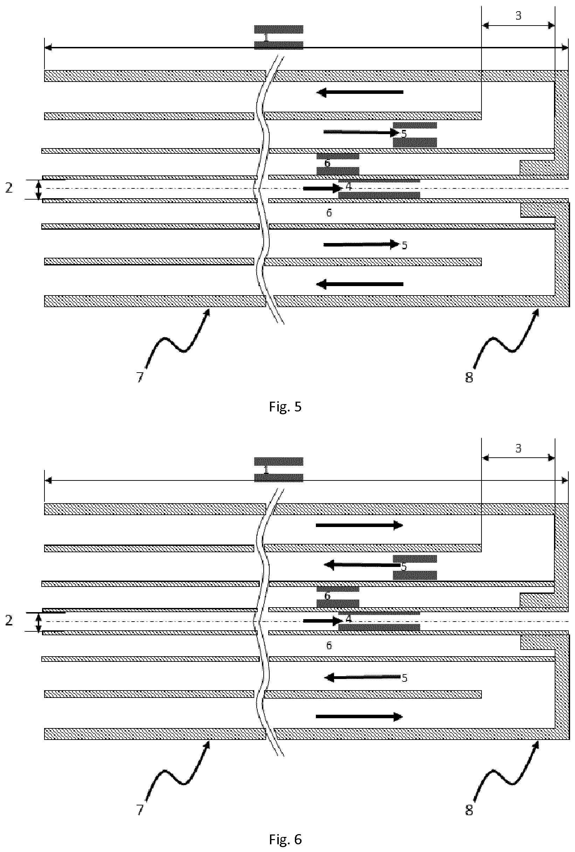

Aux figures 5 et 6, une troisième version est présentée. Elle se distingue de la précédente en ce que la distance 3 est plus grande, entre 20 et 30 mm. Comme pour les précédentes versions, deux sens de circulation du liquide de refroidissement sont possibles. Comme pour les deux premières versions, la version de la figure 6 est la plus efficace. Cette modification du canal de refroidissement 5 au niveau de la tête du dispositif 8 permet de réduire la vitesse de l'écoulement en tête 8. La conséquence est une diminution de l'efficacité du refroidissement en tête 8 mais aussi une amélioration de l'isolation thermique du conduit central d'injection 4 proche de la sortie. L'optimum de cette distance 3 est un compromis entre la nécessité de maintenir l'enveloppe extérieurs du dispositif à un niveau de température acceptable et la volonté de préserver une température suffisante du fluide gazeux injecté afin d'éviter les phénomènes de condensation du dit fluide gazeux . Dans le cas d'une fabrication en acier, on tâche de ne pas dépasser des températures de l'ordre de 500°C pour les parties métalliques, en particulier dans les zones de soudure. Par exemple, en cas d'injection de vapeur d'eau, on tâche de maintenir sa température au sein du dispositif d'injection au-dessus d'une centaine de degrés Celsius.

Pour les trois versions présentées, la longueur totale du dispositif 1, soit entre les deux extrémités 7 et 8 est en générale aux alentours de 1,50m. Le diamètre 2 du conduit d'injection central du fluide gazeux 4 est de l'ordre de 5 à 10 mm. La partie du dispositif qui est en contact avec le verre fondu, soit la partie entre la tête du dispositif et la paroi du four est de l'ordre de 0 à 0,6m.Les débits de fluide gazeux injecté 4 dans le verre fondu sont entre 0 et 3,5 Nm³/h. Dans le cas tel que prévu par l'invention d'injection de vapeur d'eau, la température d'injection se situe au minimum à 100°C. La pression d'injection est entre 1 et 4 à 5 bar.

Comme mentionné plus haut, un refroidissement du dispositif est nécessaire, pour les fabrications en acier notamment. Dans le cas d'utilisation d'eau comme liquide de refroidissement, on veille généralement à ce que la température de l'eau ne dépasse pas une cinquantaine de degrés Celsius ceci afin d'éviter des problèmes de précipitations et dépôt de matières minérales et encrassement du circuit de refroidissement. Ces dépôts et encrassements sont à terme source de mauvais échanges de chaleur entre l'eau de refroidissement et le dispositif. Là où ces dépôts et encrassements stagnent, l'eau peut même se mettre sous forme de vapeur avec pour conséquences d'augmenter la vitesse de précipitation et de dépôt, de réduire encore davantage le refroidissement et ainsi d'auto-entretenir le phénomène et l'accélérer. Cela peut mener à la destruction du dispositif : fuite du circuit de refroidissement, entrée d'eau liquide de refroidissement dans le verre en fusion et génération de défauts dans le verre en fusion. En général, ces défauts peuvent prendre la forme de bulles, inclusions métalliques, d'oxyde métallique, etc... Il est évident que ces défauts sont à proscrire car rédhibitoires, en particulier pour la production de verre plat. Cette régulation de la température du liquide de refroidissement se fait par un débit de liquide de refroidissement suffisant. Dans le cas d'utilisation d'eau comme liquide de refroidissement, un débit usuel est entre 1000 et 4000 litres/heure et préférentiellement aux alentours de 2000 litres/heure.

## Revendications

1. Procédé d'injection de fluide gazeux contenant au moins 50% de vapeur d'eau dans un bain de verre fondu dans un four de fusion du verre, au moyen d'un dispositif tubulaire, lequel comprend un ensemble de parois concentriques, une paroi dite externe étant en contact avec le verre fondu, une paroi dite interne étant constituée par un tube disposé axialement conduisant le fluide gazeux à l'extrémité du dispositif plongé dans le verre fondu, entre ces parois interne et externe, un fluide de refroidissement circulant en boucle longitudinalement le long des parois externe et celle d'un conduit concentrique au tube conduisant le fluide gazeux injecté et distant de ce dernier, la circulation s'effectuant dans l'un ou l'autre sens, avec inversion du sens de circulation à proximité de l'extrémité d'injection, cette circulation étant ménagée au moyen d'une paroi intermédiaire disposée entre les parois interne et externe, procédé dans lequel la circulation du liquide de refroidissement est réglée de manière que la température du tube conduisant ce fluide gazeux ne soit pas inférieure à la température de condensation du gaz ou de son mélange sur toute sa longueur, et que la température de la paroi au contact du verre ne dépasse pas une limite afin de maintenir une tenue mécanique suffisante et de réduire les phénomènes de corrosion et d'érosion au contact du verre fondu, cette température étant de l'ordre de 500°C pour les constructions en acier.

2. Procédé selon la revendication 1 dans lequel l'espace entre le tube conduisant le fluide gazeux injecté dans le verre fondu et le conduit concentrique à ce tube est rempli d'un gaz, limitant l'échange thermique entre le circuit de refroidissement et le fluide gazeux injecté dans le verre fondu.

3. Procédé selon l'une des revendications précédentes dans lequel la circulation du fluide de refroidissement est réglée de manière telle que la température de la paroi au contact du verre ne dépasse pas la température limite de 450°C..

4. Procédé selon l'une des revendications précédentes dans lequel le débit de vapeur d'eau injectée est au plus égal à 3,5Nm3/h.

5. Procédé selon l'une des revendications précédentes dans lequel le fluide de refroidissement est à base d'eau, et sa température à la sortie du dispositif n'est pas supérieure à 50°C et préférentiellement aux alentours de 40°C.

## Patentansprüche

1. Verfahren zum Einspritzen eines gasförmigen Fluids, umfassend mindestens 50% Wasserdampf, in ein Bad aus geschmolzenem Glas in einem Glasschmelzofen mittels einer röhrenförmigen Vorrichtung, die eine Anordnung von konzentrischen Wänden aufweist, wobei eine Außenwand in Kontakt mit dem geschmolzenen Glas ist, wobei eine Innenwand aus einem axial angeordneten Rohr besteht, das das gasförmige Fluid an das Ende der Vorrichtung, die in das geschmolzene Glas eingetaucht ist, zwischen dieser Innenwand und dieser Außenwand führt, wobei ein Kühlmittel in einer Schleife in Längsrichtung entlang der Außenwand und der Wand einer Leitung fließt, die konzentrisch zu dem Rohr, das das eingespritzte gasförmige Fluid führt, ist und von diesem Letzteren entfernt ist, wobei die Zirkulation in beide Richtungen erfolgt, wobei die Zirkulationsrichtung in der Nähe des Einspritzendes umgekehrt wird, wobei diese Zirkulation mittels einer Zwischenwand, die zwischen der Innenwand und der Außenwand angeordnet ist, erstellt wird,
wobei die Zirkulation des Kühlmittels derart geregelt wird, dass die Temperatur des Rohrs, das dieses gasförmige Fluid führt, nicht niedriger als die Kondensationstemperatur des Gases oder seiner Mischung über dessen gesamte Länge ist, und dass die Temperatur der Wand in Kontakt mit dem Glas einen Grenzwert nicht übersteigt, um eine ausreichende mechanische Festigkeit zu halten und um die Korrosions- oder Erosionserscheinungen im Kontakt mit dem geschmolzenen Glas zu reduzieren, wobei diese Temperatur bei den Stahlkonstruktionen in der Größenordnung von 500 °C liegt.

2. Verfahren nach Anspruch 1, wobei der Raum zwischen dem Rohr, das das gasförmige Fluid führt, das in das geschmolzene Glas eingespritzt wird, und der Leitung, die konzentrisch zu diesem Rohr ist, mit einem Gas gefüllt wird, wodurch der Wärmeaustausch zwischen dem Kühlkreislauf und dem gasförmigen Fluid, das in das geschmolzene Glas eingespritzt wird, begrenzt wird.

3. Verfahren nach einem der vorhergehenden Ansprüche, wobei die Zirkulation des Kühlmittels derart geregelt wird, dass die Temperatur der Wand in Kontakt mit dem Glas die Grenztemperatur von 450 °C nicht übersteigt.

4. Verfahren nach einem der vorhergehenden Ansprüche, wobei der Durchsatz an eingespritztem Wasserdampf höchstens gleich 3,5 Nm3/h ist.

5. Verfahren nach einem der vorhergehenden Ansprüche, wobei das Kühlmittel auf Wasserbasis ist und seine Temperatur am Ausgang der Vorrichtung nicht höher als 50 °C ist und vorzugsweise bei etwa 40 °C liegt.

## Claims

1. Process for the injection of gaseous fluid containing at least 50% steam into a bath of molten glass in a furnace for the melting of glass, by means of a tubular device, which device comprises a set of concentric walls, an "external" wall being in contact with the molten glass, an "internal" wall being formed by an axially positioned tube conveying the gaseous fluid to the end of the device immersed in the molten glass, between these internal and external walls a cooling fluid circulating in a loop longitudinally along the external wall and the wall of a pipe concentric with the tube conveying the injected gaseous fluid and distant from the latter, the circulation being carried out in one or other direction, with inversion of the direction of circulation close to the injection end, this circulation being controlled by means of an intermediate wall positioned between the internal and external walls, in which process the circulation of the cooling liquid is regulated so that the temperature of the tube conveying this gaseous fluid is not less than the condensation temperature of the gas or of its mixture over its entire length and that the temperature of the wall in contact with the glass does not exceed a limit, in order to maintain sufficient mechanical strength and to reduce the phenomena of corrosion and of erosion in contact with the molten glass, this temperature being of the order of 500°C for structures made of steel.

2. Process according to Claim 1, in which the space between the tube conveying the gaseous fluid injected into the molten glass and the pipe concentric with this tube is filled with a gas, limiting the heat exchange between the cooling circuit and the gaseous fluid injected into the molten glass.

3. Process according to either of the preceding claims, in which the circulation of the cooling fluid is regulated so that the temperature of the wall in contact with the glass does not exceed the limiting temperature of 450°C.

4. Process according to one of the preceding claims, in which the flow rate of steam injected is at most equal to 3.5 Nm³/h.

5. Process according to one of the preceding claims, in which the cooling fluid is based on water and its temperature at the outlet of the device is not greater than 50°C and preferably in the vicinity of 40°C.
